# EUROPEAN PATENT SPECIFICATION

(11) **EP 4 563 908 B1**
(45) Date of publication and mention of the grant of the patent: **11.11.2026**
(21) Application number: 23846020.8
(22) Date of filing: 06.06.2023
(51) Int. Cl.: F24F 11/54, F24F 11/49, F24F 11/58, F24F 11/64, F24F 11/65, F24F 11/88, G05B 15/02

(54) **MANAGEMENT SYSTEM, INSTRUCTION METHOD, AND CONTROLLER**
VERWALTUNGSSYSTEM, BEFEHLSVERFAHREN UND STEUERGERÄT
SYSTÈME DE GESTION, PROCÉDÉ D'INSTRUCTION, ET DISPOSITIF DE COMMANDE

(30) Priority: 26.07.2022 JP 2022118659
(43) Date of publication of application: 04.06.2025
(73) Proprietor: DAIKIN INDUSTRIES, LTD., Osaka-shi, Osaka 530-0001 (JP)
(72) Inventor: KITADE, Yukio, Osaka-Shi, Osaka 530-0001 (JP); YAGETA, Masanori, Osaka-Shi, Osaka 530-0001 (JP); SEMBA, Kazuhito, Osaka-Shi, Osaka 530-0001 (JP)
(74) Representative: Hoffmann Eitle
(86) International application number: PCT/JP2023/020976
(87) International publication number: WO 2024/024284

(56) References cited:
- WO-A1-2018/087926
- WO-A1-2021/176638
- AU-A1- 2020 392 910
- CN-A- 103 383 128
- JP-A- 2011 089 751
- JP-A- H07 239 146

## Description

### TECHNICAL FIELD

The present invention relates to management systems, instruction methods, and controllers.

### BACKGROUND ART

There is a known management system in which a device, such as an air conditioner or the like, provided on a customer side is connected to a controller, and the controller and a server apparatus provided in a cloud system or the like communicate via a network. In the management system, the server apparatus can monitor the device, and an administrator can operate a user terminal, such as a PC or the like, to display a state of the device.

A system in which an air conditioner is connected to a network, and the air conditioner is controlled from a remote location, is known (refer to JP 2021-135915 A, for example). CN 103 383 128 A relates to a centralized control system and control method for a multi-split central air conditioning system. WO 2018/087926 A1 relates to a monitoring and control system, an air conditioning monitoring system, and an air conditioning monitoring method, which are provided with an air conditioning system made up of a plurality of air conditioners and monitor the air conditioning system.
JP H07 239146 A relates to a centralized control device for centrally controlling a plurality of air conditioners.
WO 2021/176638 A1 relates to an air conditioner.

### DISCLOSURE OF THE INVENTION

### PROBLEM TO BE SOLVED BY THE INVENTION

However, in the case of the conventional systems, because the server apparatus transmits specific control contents for controlling the air conditioner, a traffic volume between the controller and the server apparatus may increase.

One object of the present invention is to reduce a traffic volume between a controller and a server apparatus.

### MEANS OF SOLVING THE PROBLEM

The present invention is defined by the independent claims. Other preferred features are recited in the dependent claims. A management system according to the present invention
is a management system having a controller communicable with a first air conditioner and a second air conditioner of a model different from a model of the first air conditioner, and a server apparatus communicable with the controller, wherein
a control unit of the controller is configured to transmit an instruction according to the models of the first air conditioner and the second air conditioner to the first air conditioner or the second air conditioner, in a case where an instruction is received from the server apparatus.

According to the present invention, it is possible to reduce a traffic volume between the controller and the server apparatus.

A management system according to the present invention, wherein
the first air conditioner is configured to store a program corresponding to a first control, and the second air conditioner is not configured to store the program, and
the control unit of the controller is configured to instruct the first control with respect to the first air conditioner, and to instruct a second control that substitutes for the first control with respect to the second air conditioner, in a case where an instruction related to the first control is received from the server apparatus.

A management system according to a first aspect of the present disclosure is the management system according to the present invention, wherein
the second control is an operation setting of the second air conditioner set by the control unit of the controller.

A management system according to a second aspect of the present disclosure is the management system according to the present invention or the first aspect, wherein
the control unit of the controller is configured to instruct the first air conditioner to execute the program as the first control, in a case where an inspection instruction is received from the server apparatus as the instruction related to the first control.

A management system according to a third aspect of the present disclosure is the management system according to the second aspect, wherein
the program is a pre-season inspection program for inspecting whether or not a malfunction occurred in an air conditioner in a case where the air conditioner is stopped for a certain period of time.

A management system according to a fourth aspect of the present disclosure is the management system according to the second aspect, wherein
the program is configured to perform predetermined control for predicting a malfunction of each component included in the first air conditioner.

A management system according to a fifth aspect of the present disclosure is the management system according to the present invention, wherein
the control unit of the controller is configured to instruct a restart of the control unit to the first air conditioner, and to instruct stop and restart operation by remote control to the second air conditioner, in a case where an instruction to restart the control unit as the instruction related to the first control is received from the server apparatus.

A management system according to an sixth aspect of the present disclosure is the management system according to the present invention, wherein
the control unit of the controller is configured to instruct an emergency operation to the first air conditioner, and to instruct stopping a malfunctioning outdoor unit to the second air conditioner, in a case where an instruction instructing the emergency operation is received as the instruction related to the first control from the server apparatus.

A management system according to a seventh aspect of the present disclosure
performs an instruction method in the management system having a controller communicable with a first air conditioner and a second air conditioner of a model different from a model of the first air conditioner, and a server apparatus communicable with the controller, and the instruction method includes
transmitting, by a control unit of the controller, an instruction according to the models of the first air conditioner and the second air conditioner to the first air conditioner or the second air conditioner, in a case where an instruction is received from the server apparatus.

According to the seventh aspect of the present disclosure, it is possible to reduce the traffic volume between the controller and the server apparatus.

A management system according to a eighth aspect of the present disclosure includes
a controller communicable with a server apparatus, a first air conditioner that stores a program corresponding to first control, and a second air conditioner of a model different from a model of the first air conditioner, wherein:
the second air conditioner is not configured to store the program, and
a control unit of the controller is configured to instruct the first control with respect to the first air conditioner, and to instruct a second control that substitutes for the first control with respect to the second air conditioner, in a case where an instruction related to the first control is received from the server apparatus.

According to the eighth aspect of the present disclosure, it is possible to reduce the traffic volume between the controller and the server apparatus.

### BRIEF DESCRIPTION OF THE DRAWINGS

[FIG. 1] FIG. 1 is a diagram for explaining an instruction method for a device using a schematic diagram of a management system.
[FIG. 2] FIG. 2 is a diagram illustrating an example of a system configuration of the management system.
[FIG. 3] FIG. 3 is a diagram illustrating an example of a hardware configuration of an edge device.
[FIG. 4] FIG. 4 is a diagram illustrating an example of a hardware configuration of a server apparatus.
[FIG. 5] FIG. 5 is a diagram for explaining a flow of an overall processing related to an inspection instruction.
[FIG. 6] FIG. 6 is an example of a functional block diagram for explaining functions of a first model, a second model, the edge device, and the server apparatus in the management system in blocks.
[FIG. 7] FIG. 7 is a diagram illustrating an example of model determination information stored in a model determination information storage unit.
[FIG. 8] FIG. 8 is an example of a sequence diagram for explaining a process in which the edge device switches the inspection instruction from the server apparatus into an instruction according to a model of the device and transmits the switched instruction to the device.
[FIG. 9] FIG. 9 is a diagram for explaining a flow of the overall processing when an abnormality occurs (first modification).
[FIG. 10] FIG. 10 is an example of a functional block diagram illustrating functions of the first model, the second model, the edge device, and the server apparatus in the management system in blocks (first modification).
[FIG. 11] FIG. 11 is an example of a diagram illustrating abnormality code information stored in an abnormality code storage unit.
[FIG. 12] FIG. 12 is an example of a sequence diagram for explaining a process in which the edge device switches a microcomputer reset instruction from the server apparatus into an instruction according to the model of the device and transmits the switched instruction to the device.
[FIG. 13] FIG. 13 is a diagram for explaining a flow of the overall processing when an abnormality occurs (second modification).
[FIG. 14] FIG. 14 is an example of a functional block diagram illustrating functions of the first model, the second model, the edge device, and the server apparatus in the management system in blocks (second modification).
[FIG. 15] FIG. 15 is a diagram illustrating an example of emergency operation information stored in an emergency operation information storage unit.
[FIG. 16A]FIG. 16A is a diagram for explaining a substitution of sensors which is one of three patterns of an emergency operation.
[FIG. 16B]FIG. 16B is a diagram for explaining a complement of components which is one of the three patterns of the emergency operation.
[FIG. 16C]FIG. 16C is a diagram for explaining a masking of functions which is one of the three patterns of the emergency operation.
[FIG. 17] FIG. 17 is an example of a sequence diagram for explaining a process in which the edge device switches an emergency operation instruction from the server apparatus into an instruction according to the model of the device and transmits the switched instruction to the device.

### MODE OF CARRYING OUT THE INVENTION

Hereinafter, a management system and an instruction method performed by the management system will be described as an example of modes of carrying out the present invention.

### <Outline of Operation of Management System>

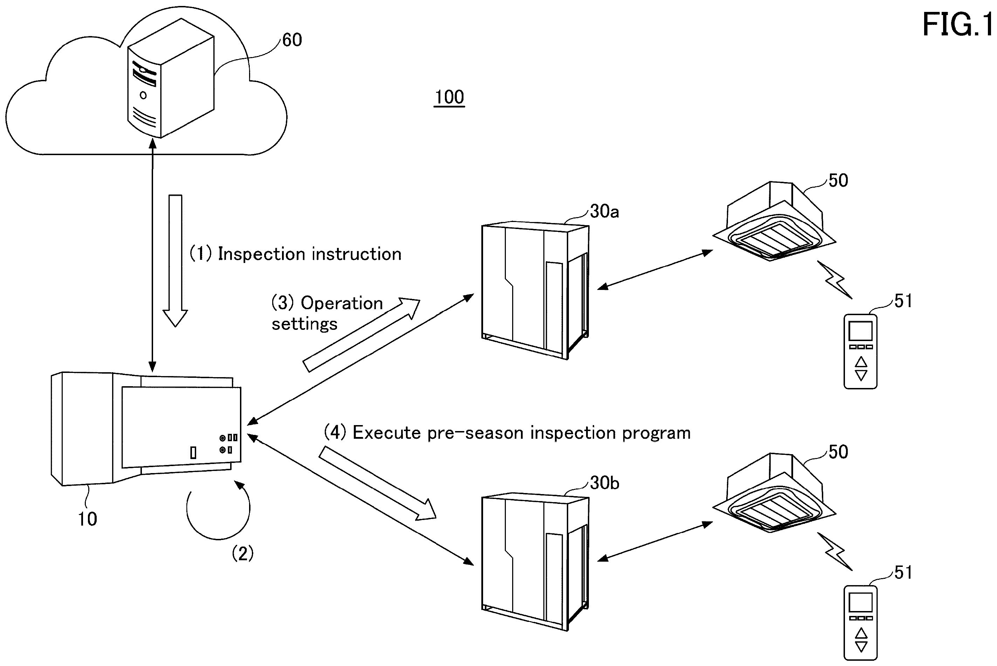

First, a process of transmitting an instruction to a device by the management system 100 will be described, with reference to FIG. 1. FIG. 1 is a diagram for explaining an instruction method for a device using a schematic diagram of a management system 100. In the present disclosure, an instruction is transmitted from a server apparatus 60 to an edge device 10, and the edge device 10 determines models of control destinations including a first model 30a (an example of a second air conditioner) and a second model 30b (an example of a first air conditioner), and switches to an instruction according to the model. In the present disclosure, the models of the device are mainly determined. The models may include a difference between a new model and an old model. In the following description, the devices will be referred to as the first model 30a or the second model 30b according to the difference of the models, and an arbitrary device will be referred to as a device 30. In addition, when simply referring to the device 30, it mainly refers to an outdoor unit, but the device 30 may include an indoor unit.

The instruction transmitted from the server apparatus 60 to the edge device 10 mainly includes a pre-season inspection instruction, a microcomputer reset, an emergency operation, or the like. In FIG. 1, an outline of the process in the case of the pre-season inspection instruction will be described.
(1) When a preset date and time arrives, the server apparatus 60 transmits the inspection instruction to the edge device 10.
(2) The edge device 10 determines whether the device 30 is the first model or the second model, based on a model name or the like acquired from the first model 30a and the second model 30b, in response to the inspection instruction (an example of an instruction related to a first control), and switches the instruction to an instruction according to the model.
(3) In a case where the instruction is the inspection instruction, the edge device 10 transmits an instruction of operation settings (a cooling and heating mode, a set temperature, an air volume, or the like) to the first model 30a (an example of a second control). Because the first model 30a does not have a pre-season inspection program, the edge device 10 transmits an instruction to substitute for the pre-season inspection program.
(4) The edge device 10 instructs the second model 30b to execute the pre-season inspection program (an example of the first control).

If the server apparatus 60 were to determine the model and transmits an instruction according to the model, the server apparatus 60 would need to separately transmit the instruction to set the operation and the instruction to execute the pre-season inspection program to the edge device 10. In contrast, because only one inspection instruction needs to be transmitted from the server apparatus 60 to the edge device 10 according to the present disclosure, it is possible to reduce a traffic volume between the server apparatus 60 and the edge device 10. In addition, it is possible to reduce an arithmetic processing (determination of a specific instruction according to each model) of the server apparatus 60. Conventionally, the edge device 10 does not switch the instruction by determining a type of instruction that can be received depending on the model of the device 30**.**

Although details will be described later, in a case where the instruction is the microcomputer reset, the edge device 10 transmits an instruction to stop and resume the operation of the first model 30a, from a remote controller 51 to the first model 30a via an indoor unit 50, and transmits an instruction to reset a microcomputer of an outdoor unit to the second model 30b.

In a case where the instruction is the emergency operation, the first model 30a is limited to a multi-system (a system in which two or more outdoor units are connected), and the edge device 10 transmits an instruction to stop a malfunctioning outdoor unit and to continue the operation of a normal outdoor unit. The edge device 10 transmits an instruction to the second model 30b to cause the second model 30b to execute a function that substitutes for the malfunction.

### <Terms>

The pre-season inspection program is a program for confirming whether or not a malfunction occurred in the air conditioner in a case where the air conditioner is stopped for a certain period of time. The certain period of time is assumed to be several months. The pre-season inspection program can force a condition of a component that does not occur during a normal operation to occur. An operation performed by the pre-season inspection program is called a test run. The pre-season inspection program can be executed even if the certain period of time has not elapsed.

The model is the type of the air conditioner. The models are different depending on whether or not a certain function is provided when focusing on the certain function. The different models may be determined from a model name, a model number, a serial number, or the like.

The server apparatus instructing refers to communicating a process to be performed by the edge device 10. An instruction may be expressed as an order, a control, a command, a directive, a request, or the like.

### <System Configuration of Management System>

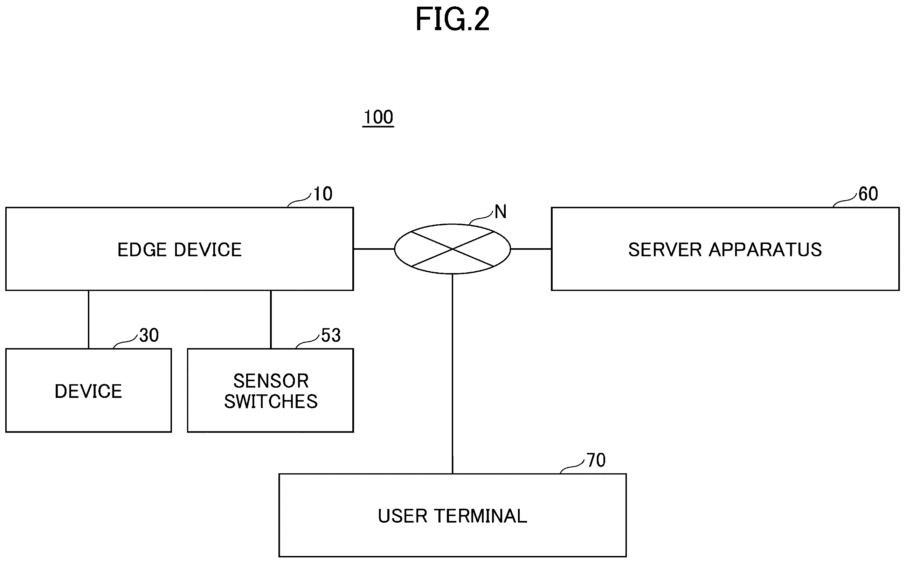

Next, a system configuration of the management system 100 will be described with reference to FIG. 2. FIG. 2 is a diagram illustrating an example of the system configuration of the management system 100.

The management system 100 provides various services utilizing the IoT, from an administrator to a general user, by causing various devices 30, such as an air conditioner, a lighting device, or the like to communicate with the server apparatus 60 on a cloud system side via a network N. The edge device 10, the device 30, sensor switches 53, and a user terminal 70 are provided on a customer side, and the server apparatus 60 is provided on the cloud system side, such as a data center, the Internet, or the like.

The device 30 refers to all equipment that consume power, and is an air conditioner, security equipment, heat source equipment, a fire alarm, air handling unit (AHU), electricity meter, lighting device, or the like, for example. The sensor switches 53 include various sensors, lamps, relays, or the like. The device 30 and the sensor switches 53 are communicably connected to the edge device 10 via a dedicated cable or a network, such as a LAN or the like. The device 30 and the sensor switches 53 may be communicably connected to the edge device 10 via wireless communication.

The device 30 and the sensor switches 53 are controlled by the edge device 10. In other words, the edge device 10 performs a required operation on the device 30 and the sensor switches 53 so as to suit purposes of the device 30 and the sensor switches 53. Contents of the control vary depending on the type of the device 30 and the sensor switches 53, but in the case where the device 30 is an air conditioner, for example, the control may include all the controls related to the functions of the air conditioner, such as the cooling and heating mode, the set temperature, the air volume, a humidity, an air direction, or the like that can be generally set in the air conditioner. In addition, the control also includes an operation mode, such as a pre-season inspection-only mode or the like, a microcomputer reset, an operation stop, a function substitution, or the like.

The device 30 collects operation data according to the device 30, and mainly periodically transmits the operation data to the edge device 10. The term periodically refers to once per minute, once per 10 minutes, once per 60 minutes, or the like, and a user or the server apparatus 60 may be able to set the timing. In addition, the device 30 can transmit the operation data to the edge device 10 in response to a request from the edge device 10 or the user terminal 70. The operation data varies depending on the device 30, and in the case of an air conditioner, for example, the operation data includes a high pressure of a refrigerant, a low pressure of the refrigerant, a refrigerant temperature, a fan rotation speed, a CPU temperature of the microcomputer, or the like.

Moreover, in a case where the device 30 detects an abnormality, the device 30 transmits an abnormality code to the edge device 10. The device 30 that detects the abnormality stops operating. The edge device 10 transmits the abnormality code to the server apparatus 60. The process of the edge device 10 may be similar for the sensor switches 53. The sensor switches 53 mainly periodically transmit information thereof and the abnormality code to the edge device 10.

The second model 30b can detect a malfunction prediction by a malfunction prediction engine included in the second model 30b, and transmit a prediction code to the edge device 10. The abnormality code and the prediction code will be described later in detail.

The edge device 10 is a controller that controls the device 30 and the sensor switches 53. The edge device 10 includes functions of a control device that controls the device 30 and the sensor switches 53, an information processing device that processes the operation data or the like, and a communication device that communicates with the server apparatus 60. The edge device 10 transmits the abnormality code received from the device 30 to the server apparatus 60, for example, and receives an instruction according to the abnormality code from the server apparatus 60. Alternatively, the edge device 10 receives an instruction from the server apparatus 60 without transmitting any information to the server apparatus 60 (for example, in a case where there is an instruction from the user terminal 70 to the server apparatus 60). The edge device 10 converts the instruction into an appropriate instruction according to the models of the device 30 and the sensor switches 53, and transmits the converted instruction to the device 30 and the sensor switches 53.

The server apparatus 60 is one or more information processing apparatuses. Although one server apparatus 60 is illustrated in FIG. 2, the server apparatus 60 may be divided into several server apparatuses 60 depending on the functions. In addition, the functions of the server apparatus 60 may be integrated into one information processing apparatus. Moreover, a plurality of server apparatuses 60 having the same function may be prepared, and the plurality of server apparatuses 60 may perform processes while communicating with one another like a server cluster.

The server apparatus 60 receives the abnormality code or the like transmitted from the edge device 10 via the network N, and generates required instructions. For example, in response to the abnormality code, the server apparatus 60 instructs the edge device 10 to perform an emergency operation regardless of the model of the device 30. In addition, the server apparatus 60 may transmit, to the edge device 10, an instruction for the device 30 according to a schedule or an operation set by the user terminal 70.

The server apparatus 60 also has functions of a Web server. In response to a request from client software (Web client), such as a Web browser or the like operated by the user, the Web server provides screen information described in an HTML file, XML, CSS file, JavaScript (registered trademark), or the like to a client. An application that uses such a mechanism of the Web is referred to as a Web application.

The server apparatus 60 is preferably compatible with cloud computing. The cloud computing is a form of use in which resources on the network are utilized without being aware of specific hardware resources. The cloud computing provides the user with data and software conventionally utilized on a user's computer, as a service via the network. The user can utilize various services from an arbitrary terminal by preparing a Web browser, an Internet connection environment, or the like operating on a personal computer, a portable information terminal, or the like.

The user terminal 70 is a client terminal that displays the various screens provided by the server apparatus 60. The user terminal 70 may be used by the administrator or by the general user. The administrator includes an administrator on the customer side and an administrator on the management system side, but the two are not distinguished from each other in the present disclosure. Further, the administrator is a person who performs maintenance and management that are not performed by the general user who uses the device 30 on a daily basis.

Various screens are displayed on the user terminal 70, and examples of the various screens include a screen of a list of the devices 30 and the sensor switches 53 connected to the edge device 10 on the customer side, an office map indicating locations where the devices 30 and the sensor switches 53 are provided, an operation screen for operating the devices 30 and the sensors, or the like.

The user terminal 70 is a personal computer (PC), a smartphone, a tablet terminal, a personal digital assistant (PDA), a wearable PC (a sunglass type, a wristwatch type, or the like), or the like, for example. The user terminal 70 includes a communication function, such that a Web browser can operate. Further, instead of the web browser, a native application dedicated to the management system 100 may operate on the user terminal 70.

### <Hardware Configuration of Edge Device and Server Apparatus>

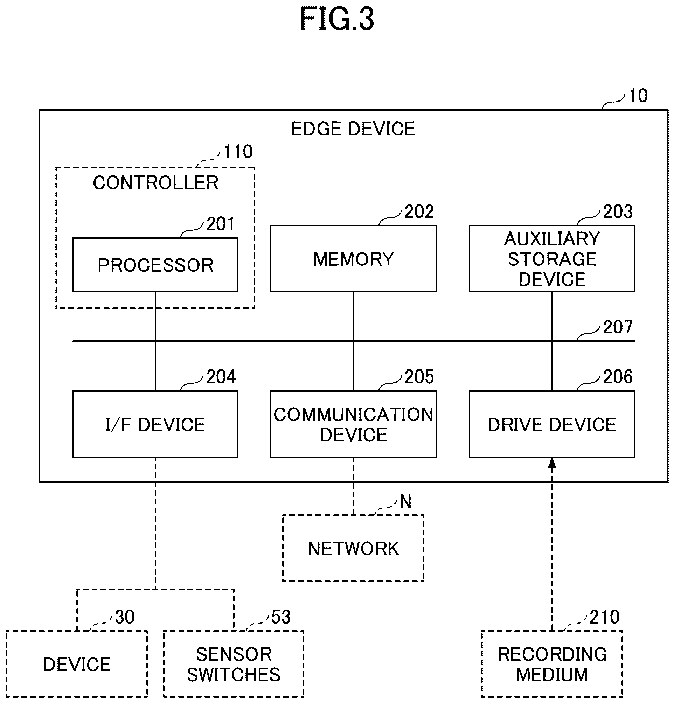

Next, a hardware configuration of the edge device 10 will be described with reference to FIG. 3. FIG. 3 is a diagram illustrating an example of the hardware configuration of the edge device 10. As illustrated in FIG. 3, the edge device 10 includes a processor 201, a memory 202, an auxiliary storage device 203, an interface (I/F) device 204, a communication device 205, and a drive device 206. Hardware elements of the edge device 10 are connected to one another via a bus 207.

The processor 201 includes various computing devices, such as a central processing unit (CPU) or the like. The processor 201 loads various programs into the memory 202 and executes the programs. The processor 201 corresponds to a controller 110 which controls the entire edge device 10.

The memory 202 includes a main storage device, such as a read only memory (ROM), a random access memory (RAM), or the like. The processor 201 and the memory 202 form a so-called computer, and the processor 201 executes the various programs loaded into the memory 202.

The auxiliary storage device 203 stores various programs, and various data used when the various programs are executed by the processor 201.

The I/F device 204 is a connection device that connects the edge device 10 to the device 30 and the sensor switches 53, which are examples of external devices.

The communication device 205 is a communication device for communicating with the server apparatus 60 via the network N.

The drive device 206 is a device in which a recording medium 210 is set. The recording medium 210 includes a medium for optically, electrically, or magnetically recording information, such as a CD-ROM, a flexible disk, a magneto-optical disk, or the like. In addition, the recording medium 210 may include a semiconductor memory or the like that electrically records information, such as a ROM, a flash memory, or the like.

The various programs installed in the auxiliary storage device 203 are installed by setting a distributed recording medium 210 in the drive device 206, and reading the various programs recorded in the recording medium 210 by the drive device 206, for example. Alternatively, the various programs installed in the auxiliary storage device 203 may be installed by being downloaded from the network N via the communication device 205.

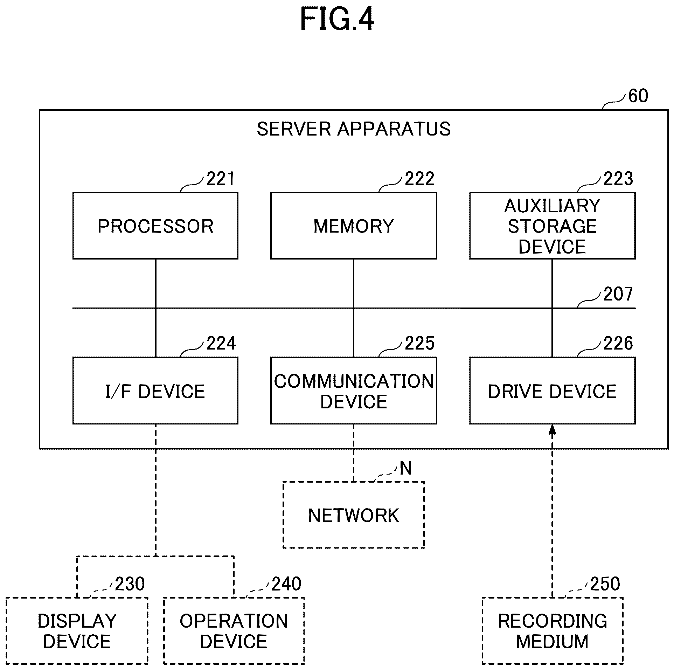

On the other hand, FIG. 4 is a diagram illustrating an example of a hardware configuration of the server apparatus 60. Because the hardware configuration of the server apparatus 60 is substantially the same as the hardware configuration of the edge device 10, differences from the hardware configuration of the edge device 10 will mainly be described in the following.

The processor 221 loads various programs into the memory 222 and executes the programs.

The I/F device 224 is a connection device that connects a display device 230 and an operation device 240, which are examples of external devices, to the server apparatus 60. The display device 230 displays an internal state of the server apparatus 60. The operation device 240 is used when an administrator of the server apparatus 60 inputs various instructions to the server apparatus 60.

The communication device 225 is a communication device for communicating with the edge device 10 and the user terminal 70 via the network N.

### <Overall Flow with respect to Inspection Instruction>

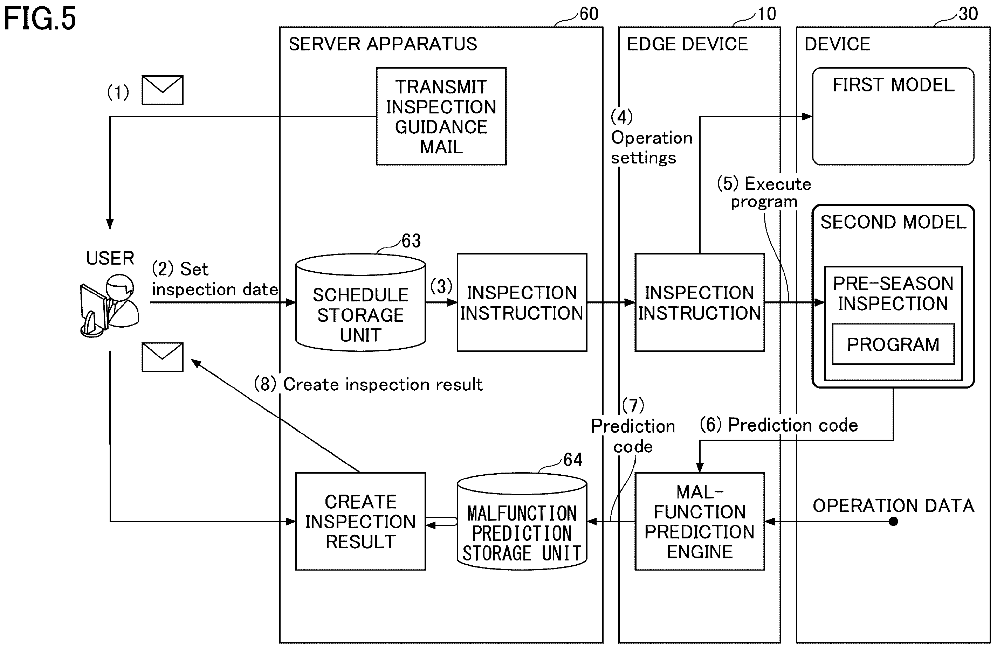

FIG. 5 is a diagram for explaining a flow of an overall processing related to an inspection instruction. The flow of the processing will be described in the following.
(1) The server apparatus 60 detects a preset timing (such as a change of season), and automatically transmits an inspection guidance mail to the administrator of the customer.
(2) When the administrator of the customer determines that a pre-season test operation should be performed in response to receiving the mail, the administrator sets an inspection date and time in the server apparatus 60. The mail is not be necessarily transmitted, and the administrator may be contacted by telephone or SNS.
(3) The server apparatus 60 transmits the inspection instruction to the edge device 10 at the set inspection date and time.
(4) The edge device 10 switches the inspection instruction according to the model of the device 30, and transmits the inspection instruction to each device 30. As will be described later in detail, the operation settings (cooling and heating mode, set temperature, air volume, or the like) are instructed to the first model 30a.
(5) Execution of the pre-season inspection program is instructed to the second model 30b.
(6) Because the pre-season inspection program is installed in the second model 30b, a test operation is executed. Further, because the pre-season inspection program includes a malfunction prediction engine, a malfunction is predicted with respect to the operation data. When a malfunction is predicted, a prediction code is generated.
(7) Because the pre-season inspection program is not installed in the first model 30a, the edge device 10 predicts a malfunction by the malfunction prediction engine.
(8) The server apparatus 60 transmits an inspection result to the customer by mail or the like, based on the inspection result (prediction code or normal) stored in a malfunction prediction storage unit 64.

### <Functions>

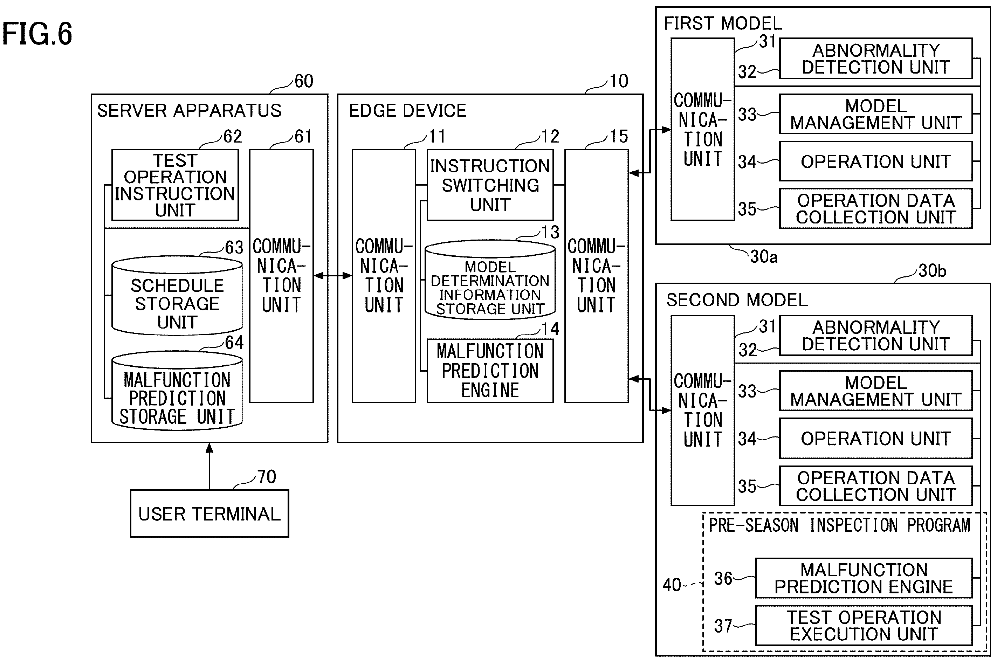

Next, a functional configuration of each device included in the management system 100 will be described in detail with reference to FIG. 6. FIG. 6 is an example of a functional block diagram for explaining functions of the first model 30a, the second model 30b, the edge device 10, and the server apparatus 60 in the management system 100 in blocks.

### <<First Model>>

The first model 30a includes a communication unit 31, an abnormality detection unit 32, a model management unit 33, an operation unit 34, and an operation data collection unit 35. These units included in the first model 30a are functions or means implemented by a microcomputer included in the device 30 and executing instructions of a program or controlling an air conditioning mechanism or the like included in the indoor unit 50 or the outdoor unit.

The communication unit 31 communicates with the edge device 10 via a dedicated cable or a network. In the present disclosure, the communication unit 31 transmits the operation data to the edge device 10, and receives the operation settings from the edge device 10.

The abnormality detection unit 32 detects a state of a component or the like that cannot continue operation (for example, the actuator does not operate, the temperature of the refrigerant becomes an abnormal value, or the like), and generates an abnormality code according to a content of this state. The edge device 10 may perform the abnormality detection.

The model management unit 33 manages the model of the device to which the model management unit 33 belongs, and transmits model information to the edge device 10 in response to a request from the edge device 10 or automatically when starting the device. The model information includes a model name, a model number, a serial number, or the like, and may be any information that enables determination of the model.

The operation unit 34 controls the outdoor unit and the indoor unit 50, respectively, to perform an air conditioning operation according to the cooling and heating mode, the set temperature, the air volume, or the like set by the user from the remote controller 51 or the like.

The operation data collection unit 35 collects the operation data indicating the state of the device 30 from the indoor unit 50 and the outdoor unit, periodically, for example. The operation data includes various data, such as the high pressure of the refrigerant, the low pressure of the refrigerant, the refrigerant temperature, the fan rotation speed, and the CPU temperature of the microcomputer, or the like, for example.

Next, the second model 30b will be described. The second model 30b includes a communication unit 31, an abnormality detection unit 32, a model management unit 33, an operation unit 34, an operation data collection unit 35, a malfunction prediction engine, and a test operation execution unit 37. The communication unit 31, the abnormality detection unit 32, the model management unit 33, the operation unit 34, and the operation data collection unit 35 may have the same functions as those of the first model 30a.

A pre-season inspection program 40 is installed in the second model 30b. The pre-season inspection program 40 is a program for operating the device 30 in the inspection-only mode. The malfunction prediction engine 36 and the test operation execution unit 37 are implemented by the pre-season inspection program 40.

The malfunction prediction engine 36 is a function for predicting a malfunction. Predicting a malfunction refers to detecting a state where the operation can be performed but there is a possibility of leading to the malfunction, and not to detecting an abnormality such that the operation cannot be continued. On the other hand, the malfunction refers to a state where it is difficult to continue the operation. The malfunction prediction engine 36 refers to an identification model that is trained by an algorithm, such as deep learning or the like, so as to output a possibility of malfunction with respect to the operation data, using the operation data and a correspondence between a case where malfunction occurs and a case where malfunction does not occur, as training data of the machine learning. The malfunction prediction engine 36 outputs a possibility (probability) of the malfunction with respect to the input operation data. In a case where the probability exceeds a threshold value, the malfunction prediction engine 36 determines that the malfunction is predicted.

The machine learning is a technique for causing a computer to acquire a human-like learning ability, and is a technique by which a computer autonomously generates an algorithm required for the determination, such as data identification or the like, from the training data received in advance, and applies the algorithm to new data to perform the prediction. The learning method for the machine learning may be any one of supervised learning, unsupervised learning, semi-supervised learning, reinforcement learning, and deep learning, or may combine these learning methods, and the learning method is not particularly limited. Examples of the machine learning method include perceptron, deep learning, support vector machine, logistic regression, naive Bayes, decision tree, random forest, or the like, and the machine learning method is not limited to the methods described in the present disclosure.

The test operation execution unit 37 forcibly generates a state where a component inspection of the outdoor unit and the indoor unit 50 can be performed. The malfunction prediction engine 36 can also detect the malfunction prediction from the operation data during the test operation. The inspection performed before a summer or winter season in which the air conditioner is used is mainly referred to as a pre-season inspection. However, the test operation can be performed regardless of whether it is pre-season. The pre-season inspection program can forcibly generate a condition of a component that does not occur during the normal operation. As an example, the pre-season inspection may be performed to determine whether or not an expansion valve can open and close within a predetermined range of motion, whether or not a compressor can generate a predetermined pressure, whether or not an electromagnetic valve can be opened and closed, whether or not an arbitrary actuator operates according to command, or the like.

### <<Edge Device>>

The edge device 10 includes communication units 11 and 15, an instruction switching unit 12, a malfunction prediction engine 14, and a model determination information storage unit 13. These units included in the edge device 10 are functions or means implemented by operating any of the constituent elements illustrated in FIG. 3 in response to a command from the processor 201 according to a program loaded from the auxiliary storage device 203 into the memory 202. In addition, the model determination information storage unit 13 is implemented by the auxiliary storage device 203 or the like illustrated in FIG. 3.

The communication unit 15 communicates with the first model 30a and the second model 30b via a dedicated cable or a network. In the present disclosure, the communication unit 15 receives the operation data from the first model 30a and the second model 30b. Further, the communication unit 15 transmits the operation settings to the first model 30a, and instructs the second model 30b to execute the pre-season inspection program 40.

Moreover, the communication unit 11 communicates with the server apparatus 60 via the network N. In the present disclosure, the communication unit 11 receives the inspection instruction from the server apparatus 60.

The instruction switching unit 12 switches the instruction content of the pre-season inspection instruction received from the server apparatus 60, according to the model of the device 30 at the transmission destination. In the case of the second model 30b, the instruction switching unit 12 transmits the execution of the pre-season inspection program 40 (instruction to switch to an inspection-only mode). In the case where the device 30 is the first model, the instruction switching unit 12 generates and instructs the operation settings (the cooling and heating mode, the set temperature, the air volume, or the like) of the first model 30a, as a substitute for the pre-season inspection program 40. The substitute refers to the use of one in place of another. The operation settings instruct an operation mode which detects the abnormality within a detectable range, although the abnormality cannot be confirmed in detail with a high accuracy as is possible by the pre-season inspection program.

The functions of the malfunction prediction engine 14 may be the same as those of the second model 30b. Because the first model 30a does not include the malfunction prediction engine 36, the malfunction prediction engine 14 performs malfunction prediction with respect to the operation data transmitted from the first model 30a.

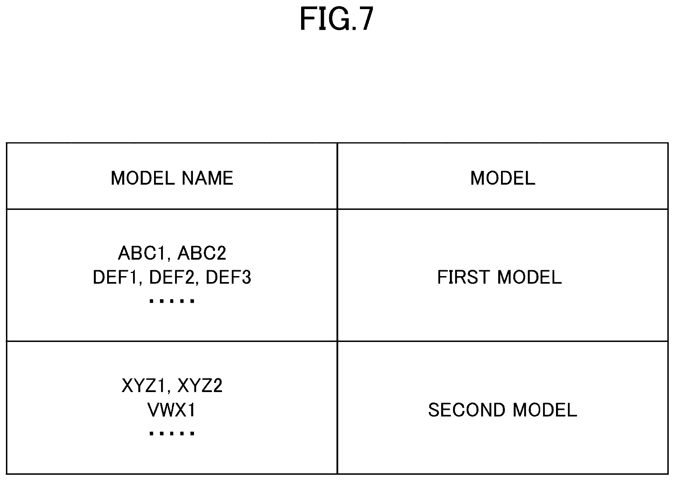

As illustrated in FIG. 7, model distinctions with respect to the models are registered in the model determination information storage unit 13. FIG. 7 illustrates model determination information stored in the model determination information storage unit 13. In the model determination information, a model is registered with respect to a model name. The instruction switching unit 12 collates the model name acquired from the device 30 with the model determination information, and determines the model thereof.

### <<Server Apparatus>>

A description will be made with reference to FIG. 6**.** The server apparatus 60 includes a communication unit 61, a test operation instruction unit 62, a schedule storage unit 63, and a malfunction prediction storage unit 64. These units included in the server apparatus 60 are functions or means that are implemented by any of the constituent elements illustrated in FIG. 4 operating in response to a command from the processor 221, according to a program loaded from the auxiliary storage device 223 into the memory 222. In addition, the schedule storage unit 63 and the malfunction prediction storage unit 64 are implemented by the auxiliary storage device 223 or the like illustrated in FIG. 4.

The communication unit 61 communicates with the edge device 10 via the network N**.** In the present disclosure, the communication unit 61 transmits the inspection instruction to the edge device 10.

The test operation instruction unit 62 transmits the inspection instruction (test operation instruction) to the edge device 10, based on a test operation schedule set in the schedule storage unit 63.

For this reason, the date and time when the pre-season inspection is to be performed, which is set from the user terminal 70, is set in the schedule storage unit 63. If the air conditioner operates unexpectedly while the customer is working and the temperature and humidity greatly fluctuate, this may disrupt business operations, and thus, the date and time of the pre-season inspection is normally set outside working hours.

Accordingly, the user terminal 70 connects to the server apparatus 60 using the Web browser, and displays a schedule setting screen. The administrator of the customer can set a desired date and time from the schedule setting screen. In order to prevent the administrator from forgetting to perform the pre-season inspection before the season arrives, the administrator of the customer may be prompted to set the schedule automatically or by mail, telephone, or the like from a customer engineer or the like.

The malfunction prediction storage unit 64 stores the prediction code detected by the malfunction prediction engines 14 and 36 in association with the identification information or the like of the device 30. Even in a case where the malfunction prediction engines 14 and 36 do not generate a prediction code in response to the inspection instruction, information indicating that there is no problem (normal state) as a result of the inspection is recorded in association with the identification information or the like of the device 30. The customer engineer or the like can visit the customer whose prediction code is stored. With respect to the customer for whom the normal state is stored, a message indicating that there is no problem as a result of the inspection is transmitted to the administrator of the customer by mail or the like.

### <Operation or Process>

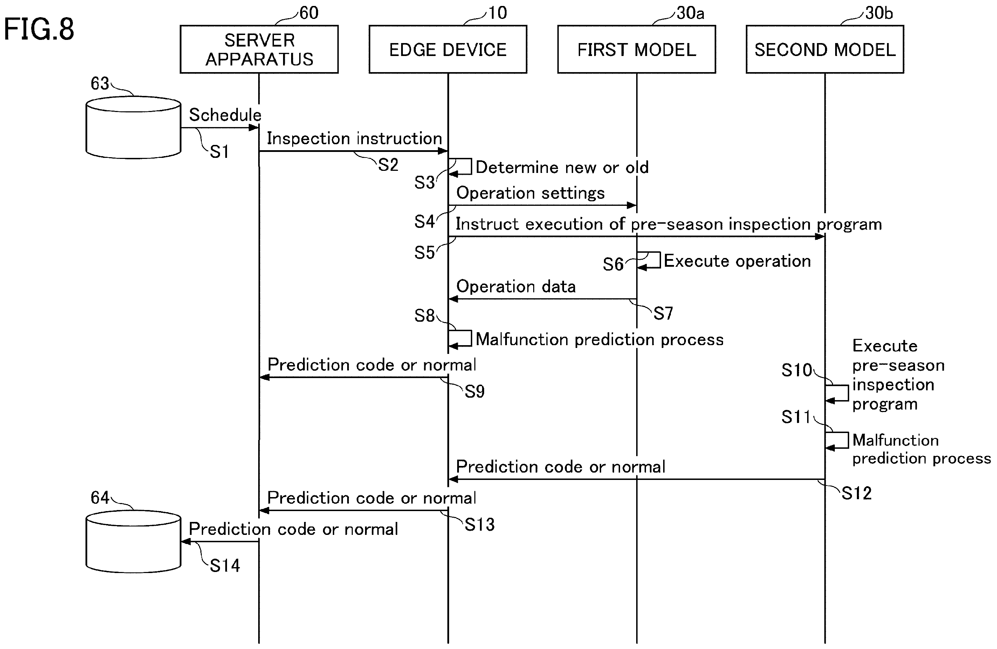

Next, a process of transmitting the inspection instruction from the edge device 10 to the device 30 will be described with reference to FIG. 8**.** FIG. 8 is a sequence diagram for explaining a process in which the edge device 10 switches the inspection instruction from the server apparatus 60 into an instruction according to the model of the device 30 and transmits the switched instruction to the device 30.

S1: The test operation instruction unit 62 of the server apparatus 60 periodically accesses the schedule storage unit 63, and compares the current date and time with the date and time when the test operation is to be performed.

S2: In a case where there is a date and time when the test operation is to be performed as a result of the comparison, the test operation instruction unit 62 transmits an inspection instruction to the edge device 10 via the communication unit 61. The test operation instruction unit 62 transmits the inspection instruction without taking into consideration the model of the device 30 connected to the edge device 10.

S3: The communication unit 11 of the edge device 10 receives the inspection instruction, and the instruction switching unit 12 determines the model of the device 30 by referring to the model determination information storage unit 13. The instruction switching unit 12 may inquire the model name with respect to all of the connected devices 30, or the model name may be transmitted to the edge device 10 in advance when the power of the device 30 is turned on or when the operation of the device 30 is started.

S4: With respect to the first model 30a, the instruction switching unit 12 generates the operation settings (the cooling and heating mode, the set temperature, the air volume, or the like), and instructs an operation according to the operation settings. The instruction switching unit 12 inquires whether or not the first model 30a is performing an operation before instructing the operation to the first model 30a, and postpones the instructing in a case where the first model 30a is performing an operation. In addition, the instruction switching unit 12 holds current operation settings (the cooling and heating mode, the set temperature, the air volume, or the like) before the instructing, and sets the current operation settings to the first model 30a (restores the settings to the original state) when the operation in response to the inspection instruction ends.

S5: The instruction switching unit 12 instructs the second model 30b to execute the pre-season inspection program 40. In this case, the instruction switching unit 12 also inquires the second model 30b whether or not the second model 30b is performing an operation before instructing the operation to the second model 30b, and postpones the instructing in a case where the second model 30b is performing an operation. The instruction switching unit 12 holds the current operation settings (the cooling and heating mode, the set temperature, the air volume, or the like) before the instructing, and sets the current operation settings to the second model 30b when the test operation by the pre-season inspection program 40 ends.

S6: The communication unit 31 of the first model 30a receives the instruction to perform the operation according to the operation settings, and the operation unit 34 operates the outdoor unit and the indoor unit 50 with the operation settings.

S7: The operation data collection unit 35 collects the operation data, and transmits the operation data to the edge device 10 via the communication unit 31. In a case where the abnormality detection unit 32 detects an abnormality at this stage, an abnormality code is transmitted, and the operation unit 34 suspends the operation.

S8: The communication unit 15 of the edge device 10 receives the operation data, and the malfunction prediction engine 14 performs a malfunction prediction processing.

S9: The communication unit 11 of the edge device 10 transmits the prediction code or normal, which is the result of the malfunction prediction process, to the server apparatus 60.

S10: On the other hand, the communication unit 31 of the second model 30b receives the instruction to execute the pre-season inspection program 40, and the test operation execution unit 37 performs the test operation. In a case where the abnormality detection unit 32 detects an abnormality at this stage, the abnormality code is transmitted, and the test operation execution unit 37 suspends the test operation.

S11: The operation data collection unit 35 collects the operation data, and the malfunction prediction engine 36 performs the malfunction prediction process.

S12: The communication unit 31 of the second model 30b transmits the prediction code or normal, which is the result of the malfunction prediction process, to the edge device 10.

S13: Because the communication unit 15 of the edge device 10 receives the prediction code or normal, the communication unit 11 transmits the prediction code or normal to the server apparatus 60 without performing the malfunction prediction process.

S14: The communication unit 61 of the server apparatus 60 receives the prediction code or normal. The communication unit 61 stores the prediction code or normal of the steps S9 and S14 in the malfunction prediction storage unit 64.

Hence, the edge device 10 according to the present disclosure switches the inspection instruction from the server apparatus 60 depending on the model, and transmits to the first model an instruction substituting for the instruction to the second model. Accordingly, because the server apparatus 60 simply needs to transmit one inspection instruction to the edge device 10, the present disclosure can reduce the traffic volume between the server apparatus 60 and the edge device 10. In addition, because the server apparatus 60 does not switch the inspection instruction depending on the model, a processing load can be reduced.

### <First Modification>

Next, as a modification of the inspection instruction, a process for a case where the server apparatus 60 transmits a microcomputer reset to the edge device 10 when an abnormality is detected will be described.

### <Overall Flow When Abnormality Occurs>

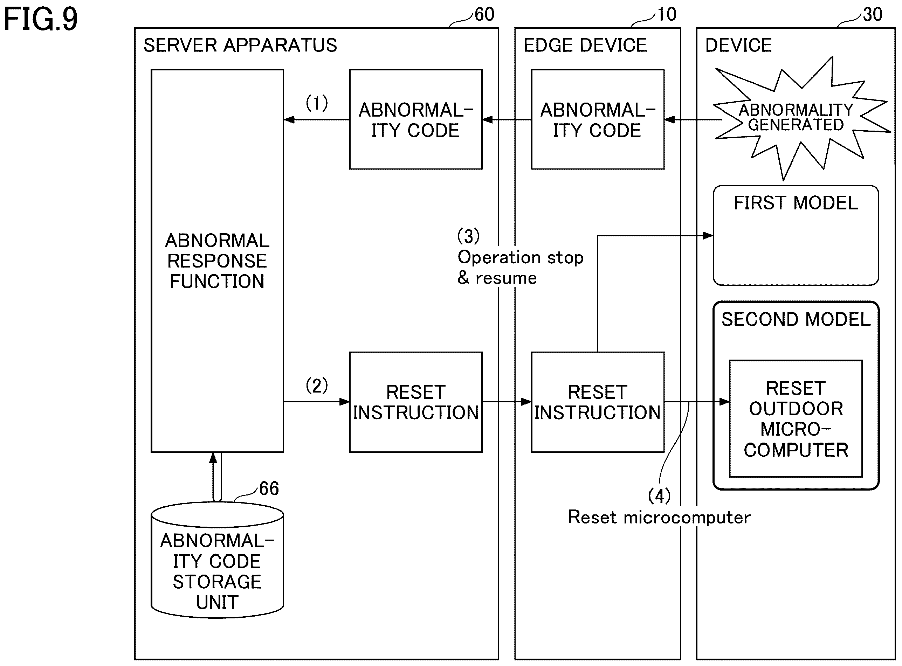

FIG. 9 is a diagram for explaining a flow of the overall processing when an abnormality occurs. The following description will be given along the flow of processing.
(1) When an abnormality occurs in the device 30, an abnormality code indicating a content of the abnormality is transmitted to the server apparatus 60 via the device 30 and the edge device 10.
(2) The server apparatus 60 determines whether or not a microcomputer reset can be performed from the abnormality code, and when the microcomputer reset can be performed, the server apparatus 60 transmits a microcomputer reset instruction to the edge device 10.
(3) The edge device 10 switches the microcomputer reset instruction according to the model of the device 30, and transmits the switched microcomputer reset instruction to each device 30. For example, the first model 30a is instructed to stop and resume the operation by remote control.
(4) The microcomputer reset is instructed to the second model 30b.

### <Functions>

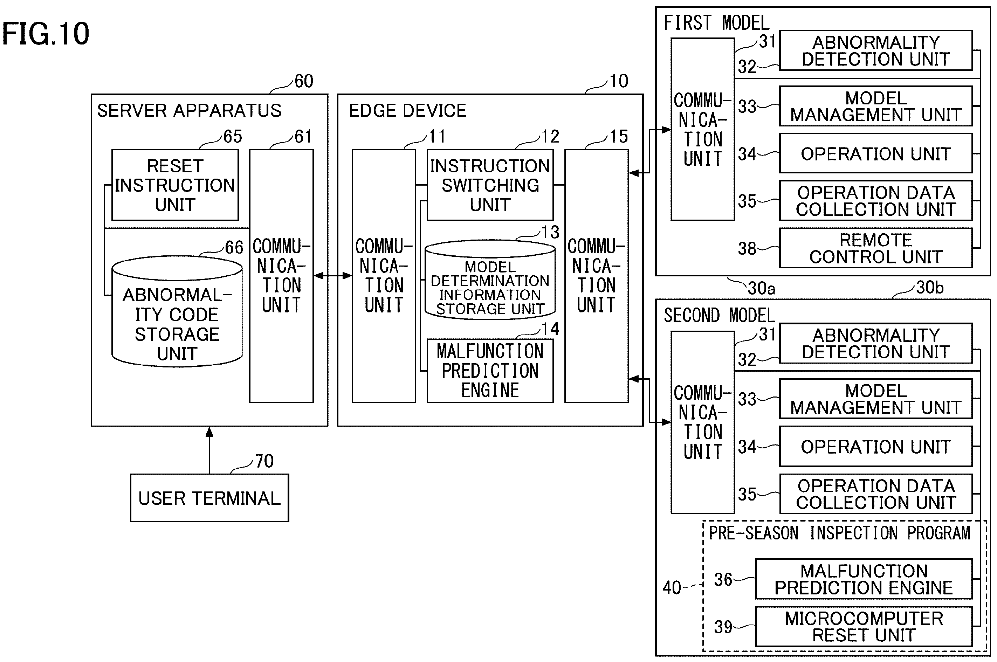

FIG. 10 is an example of a functional block diagram illustrating functions of the first model 30a, the second model 30b, the edge device 10, and the server apparatus 60 in the management system 100 in blocks. In the description of FIG. 10, because the constituent elements designated by the same reference numerals in FIG. 6 have the same functions, only the main constituent elements of the present embodiment may mainly be described in some cases.

### <<First Model>>

The first model 30a newly includes a remote control unit 38. The remote control unit 38 instructs the remote controller 51, which communicates with the indoor unit 50 via wired or wireless communication, to stop the operation of the indoor unit 50. The remote control unit 38 instructs the remote controller 51 to start the operation after a predetermined time elapses from stopping the operation. As described above, because the first model 30a does not have a function of resetting the microcomputer of the outdoor unit, the first model 30a instructs the stop and resume of the operation by the remote control. The abnormality may be eliminated by stopping and resuming the operation.

### <<Second Model>>

The second model 30b newly includes a microcomputer reset unit 39. The microcomputer reset unit 39 resets the microcomputer of the outdoor unit. The reset refers to a restart. The abnormality may be eliminated by restarting the microcomputer. The resetting of the microcomputer includes resetting of all microcomputers set in advance among a plurality of microcomputers included in the outdoor unit, and may further include resetting one or more microcomputers of the indoor unit, as required.

### <<Edge Device>>

A functional block diagram of the edge device 10 is the same as that of FIG. 6, but the functions of the instruction switching unit 12 are different. In the case where an abnormality is detected, the edge device 10 may receive a microcomputer reset instruction from the server apparatus 60. The instruction switching unit 12 switches the content of the instruction according to the model of the device 30 which transmitted the abnormality code. In the case where the device 30 is the first model, the instruction switching unit 12 instructs the stop and resume of the operation by the remote control. In the case of the second model 30b, the instruction switching unit 12 instructs the microcomputer reset.

### <<Server Apparatus>>

The server apparatus 60 further includes a reset instruction unit 65 and an abnormality code storage unit 66. In a case where the reset instruction unit 65 receives an abnormality code from the device 30 via the edge device 10, the reset instruction unit 65 instructs the edge device 10 to reset the microcomputer. More specifically, it is determined whether or not the microcomputer reset is possible with respect to abnormality codes, and the reset instruction unit 65 instructs the edge device 10 to reset the microcomputer with respect to the abnormality code for which the microcomputer reset is possible.

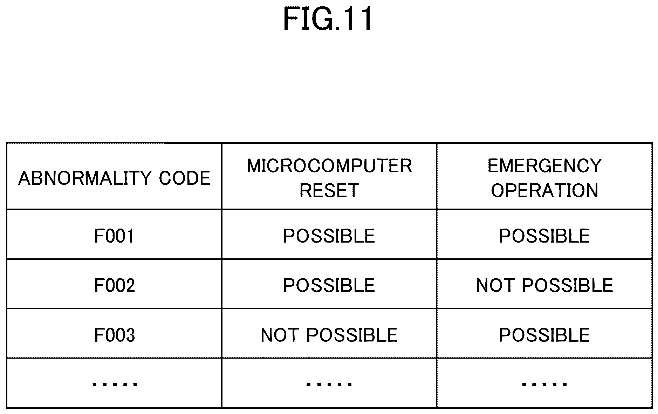

The abnormality code storage unit 66 stores whether or not the microcomputer can be reset in association with the abnormality codes. FIG. 11 illustrates abnormality code information stored in the abnormality code storage unit 66. As illustrated in FIG. 11, in the abnormality code storage unit 66, whether or not the microcomputer reset is possible and whether or not the emergency operation is possible are set in association with the abnormality codes. This is because the microcomputer reset, the emergency operation, or both the microcomputer reset and the emergency operation may not be valid depending on the contents of the abnormality.

The reset instruction unit 65 instructs the microcomputer reset only to with respect to an abnormality code for which the microcomputer reset is possible. With respect to an abnormality code for which the microcomputer reset is not possible but the emergency operation is possible, the emergency operation which will be described later is instructed. Thus, the microcomputer reset is given priority over the emergency operation. This is because, in the case where the abnormality is eliminated by the microcomputer reset, the device 30 can exhibit 100% of the functions, but a part of the functions may be restricted for the emergency operation.

### <Operation or Process>

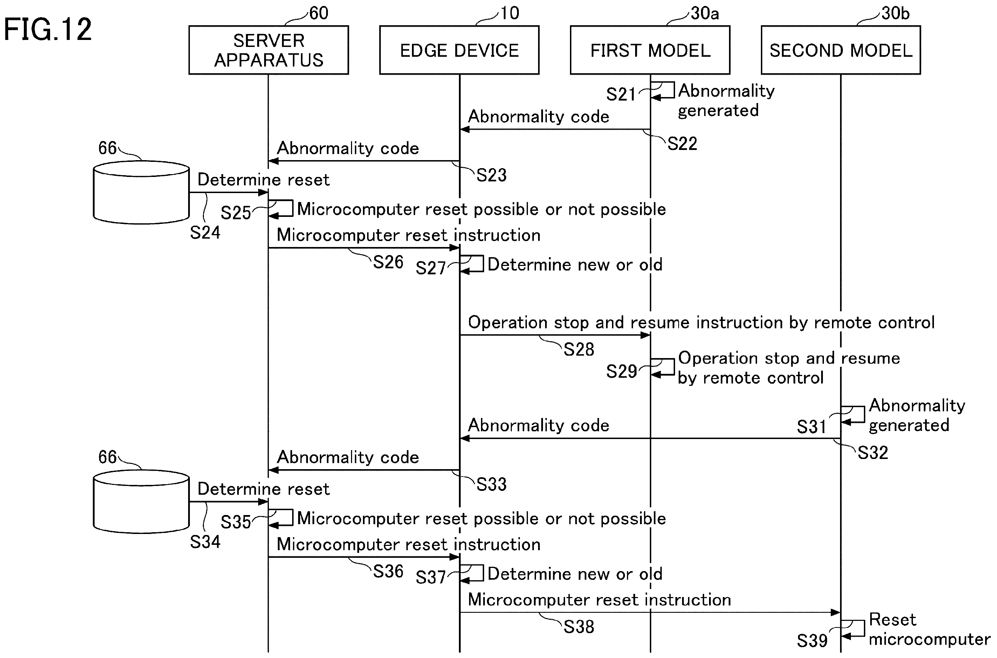

Next, a process of transmitting the microcomputer reset instruction from the edge device 10 to the device 30 will be described with reference to FIG. 12. FIG. 12 is a sequence diagram for explaining a process in which the edge device 10 switches a microcomputer reset instruction from the server apparatus 60 into an instruction according to the model of the device 30 and transmits the switched instruction to the device 30. First, a case where the abnormality occurs in the first model 30a will be described.

S21: An abnormality occurs during the operation of the first model 30a. The abnormality detection unit 32 detects the abnormality.

S22: When the abnormality detection unit 32 detects the abnormality, the communication unit 31 promptly transmits an abnormality code to the edge device 10. The identification information of the device 30 is attached to the abnormality code. The operation unit 34 stops the operation.

S23: When the communication unit 15 of the edge device 10 receives the abnormality code, the communication unit 11 transmits the abnormality code to the server apparatus 60.

S24: The communication unit 61 of the server apparatus 60 receives the abnormality code, and the reset instruction unit 65 acquires whether or not the reset is possible, associated with the abnormality code, from the abnormality code storage unit 66.

S25: The reset instruction unit 65 determines whether or not the received abnormality code can be reset. In the description of FIG. 12, a case where the microcomputer can be reset will be described.

S26: The reset instruction unit 65 transmits the microcomputer reset instruction to the edge device 10 without taking into consideration the model of the device 30. Because the identification information of the first model 30a is attached to the abnormality code, the reset instruction unit 65 stores the identification information of the first model 30a which transmitted the microcomputer reset instruction. This is because the server apparatus 60 determines whether or not the microcomputer reset instruction is already transmitted the next time the server apparatus 60 receives the abnormality code.

S27: The communication unit 11 of the edge device 10 receives the microcomputer reset instruction, and the instruction switching unit 12 determines the model of the device 30 which transmitted the abnormality code by referring to the model determination information storage unit 13. The model name may be transmitted to the edge device 10 together with the abnormality code, or the instruction switching unit 12 may inquire the model name again to the first model 30a.

S28: With respect to the first model 30a, the instruction switching unit 12 transmits an operation stop and resume instruction by remote control via the communication unit 31.

S29: Because the communication unit 31 of the first model 30a receives the operation stop and resume instruction by the remote control, the remote control unit 38 first instructs the indoor unit 50 to stop the operation. In a case where the operation is already stopped due to the detection of an abnormality, the operation stop is unnecessary, and the operation stop is transmitted in order to reliably stop the operation. The reason why the operation stop is instructed to the indoor unit 50 is because the outdoor unit communicates with the edge device 10, and the indoor unit 50 communicates with the remote controller 51. Hence, the indoor unit 50 requests the remote controller 51 to stop the operation, and the remote controller 51 instructs the indoor unit 50 to stop the operation. The outdoor unit also stops the operation when the indoor unit 50 stops the operation. After the operation of the indoor unit 50 is stopped, the remote control unit 38 waits for a predetermined time, and next instructs the indoor unit 50 to resume the operation. The indoor unit 50 requests the remote controller 51 to resume the operation, and thus, the remote controller 51 instructs the indoor unit 50 to resume the operation. The operation of the outdoor unit is also started when the operation of the indoor unit 50 is started.

Because the operation of the first model 30a is started, in a case where the abnormality is not eliminated, the abnormality detection unit 32 will detect the abnormality. In this case, the abnormality code is transmitted again to the server apparatus 60, and if the emergency operation is possible, the emergency operation instruction is transmitted to the first model 30a. In a case where the emergency operation is not possible, the customer engineer is sent to the customer as soon as possible, and even in the case where the emergency operation is possible, the customer engineer is preferably sent to the customer as soon as possible. In the case where the abnormality is eliminated, the abnormality detection unit 32 will not detect an abnormality, and thus, the operation is continued.

Next, a case where an abnormality occurs in the second model 30b will be described.

S31: An abnormality occurs during the operation of the second model 30b. The abnormality detection unit 32 detects the abnormality.

S32: When the abnormality detection unit 32 detects the abnormality, the communication unit 31 promptly transmits an abnormality code to the edge device 10. The identification information of the device 30 is attached to the abnormality code. Processes of subsequent steps S33 to S37 may be the same as those of steps S23 to S27.

S38: With respect to the second model 30b, the instruction switching unit 12 transmits a microcomputer reset instruction via the communication unit 15.

S39: Because the communication unit 31 of the second model 30b receives the microcomputer reset instruction, the microcomputer reset unit 39 resets the microcomputer of the outdoor unit. The outdoor unit is restarted by the reset. The operation of the second model 30b is started automatically or in response to an instruction from the microcomputer reset unit 39. In a case where the abnormality is not eliminated, the abnormality detection unit 32 will detect the abnormality. In this case, the abnormality code is transmitted again to the server apparatus 60, and if the emergency operation is possible, the emergency operation instruction is transmitted to the first model 30a. In a case where the emergency operation is not possible, the customer engineer is sent to the customer as soon as possible, and even in the case where the emergency operation is possible, the customer engineer is preferably sent to the customer as soon as possible.

Hence, the edge device 10 according to the present disclosure switches the microcomputer reset instruction from the server apparatus 60 according to the model, and transmits the switched instruction to the device 30. Accordingly, because the server apparatus 60 simply needs to transmit one microcomputer reset instruction to the edge device 10, the present disclosure can reduce the traffic volume between the server apparatus 60 and the edge device 10. In addition, because the server apparatus 60 does not switch the microcomputer reset instruction depending on the model, the processing load can be reduced.

### <Second Modification>

Next, as a modification of the inspection instruction, a process for a case where the server apparatus 60 transmits an emergency operation instruction to the edge device 10 when an abnormality is detected will be described.

### <Overall Flow When Abnormality Occurs>

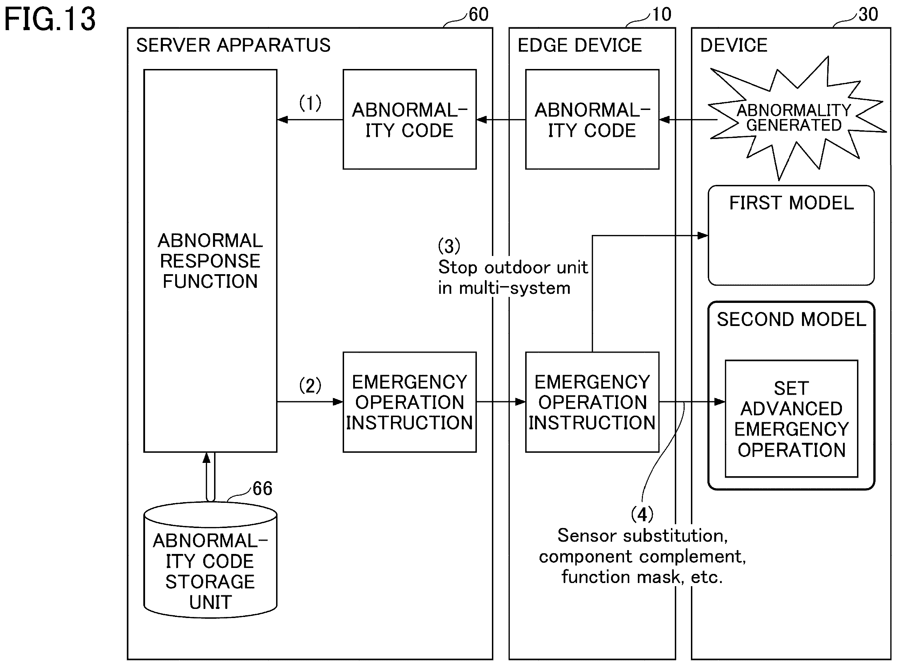

FIG. 13 is a diagram for explaining a flow of the overall processing when an abnormality occurs. The following description will be given along the flow of the processing.
(1) When an abnormality occurs in the device 30, an abnormality code indicating a content of the abnormality is transmitted to the server apparatus 60 via the device 30 and the edge device 10.
(2) It is assumed that the server apparatus 60 determined that the microcomputer reset is not possible or the microcomputer reset instruction is already transmitted. The server apparatus 60 determines whether or not the emergency operation is possible from the abnormality code, and transmits an emergency operation instruction to the edge device 10 in the case where the emergency operation is possible.
(3) The edge device 10 switches the emergency operation instruction according to the model of the device 30, and transmits the switched emergency operation instruction to each device 30. For example, the first model 30a is instructed to stop the outdoor unit that is not malfunctioning in the multi-system.
(4) The emergency operation corresponding to the abnormality code is instructed to the second model 30b. The emergency operation refers to an operation that is continued although a part of the functions is restricted by substitution of sensors, storage of components, masking of functions, or the like. The edge device 10 performs a setting for the emergency operation to the second model 30b, but the user performs a final operation for starting the emergency operation. This is because there are customers who do not wish to perform the emergency operation.

### <Functions>

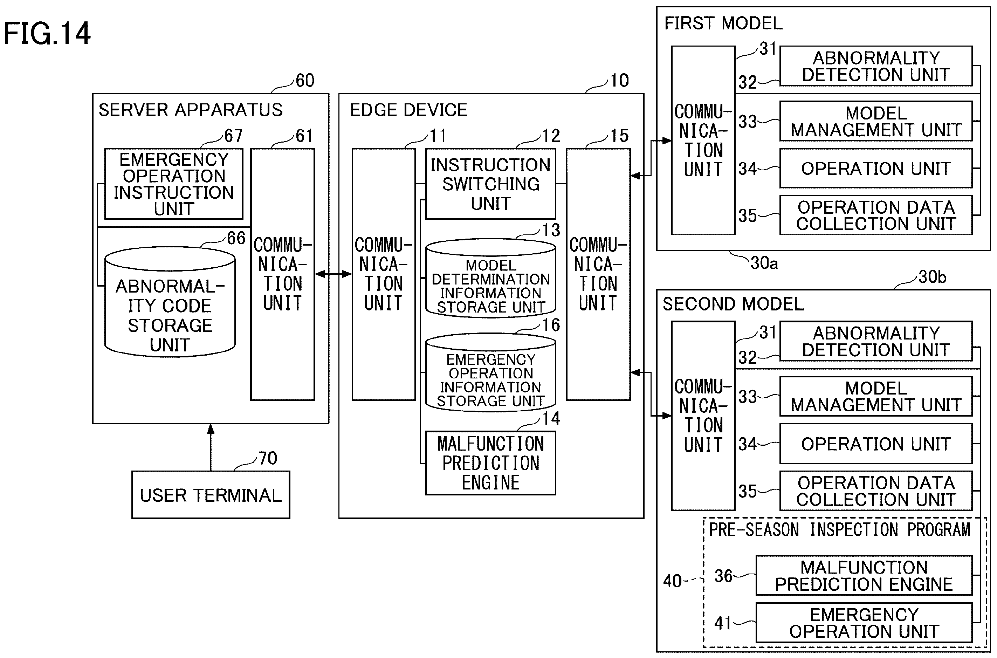

FIG. 14 is an example of a functional block diagram for explaining functions of the first model 30a, the second model 30b, the edge device 10, and the server apparatus 60 in the management system 100 in blocks. In the description of FIG. 14, because the constituent elements designated by the same reference numerals in FIG. 6 have the same functions, only the main constituent elements of the present embodiment may mainly be described in some cases.

### <<First Model>>

The first model 30a of the present disclosure is assumed to be a multi-system in which two or more outdoor units are connected. In the emergency operation of the first model 30a, the malfunctioning outdoor unit of the multi-system is stopped, and the operation is continued solely by the normal outdoor unit. For this reason, in the case of the first model 30a, a target of the emergency operation is the multi-system in which two or more outdoor units are connected. In the first model 30a, the outdoor unit is stopped by the operation unit 34, and thus, there is no new function in FIG. 14.

### <<Second Model>>

The second model 30b newly includes an emergency operation unit 41. The emergency operation unit 41 performs an emergency operation with respect to the second model 30b according to an emergency operation instruction from the edge device 10. Details will be described with reference to the edge device 10.

### <<Edge Device>>

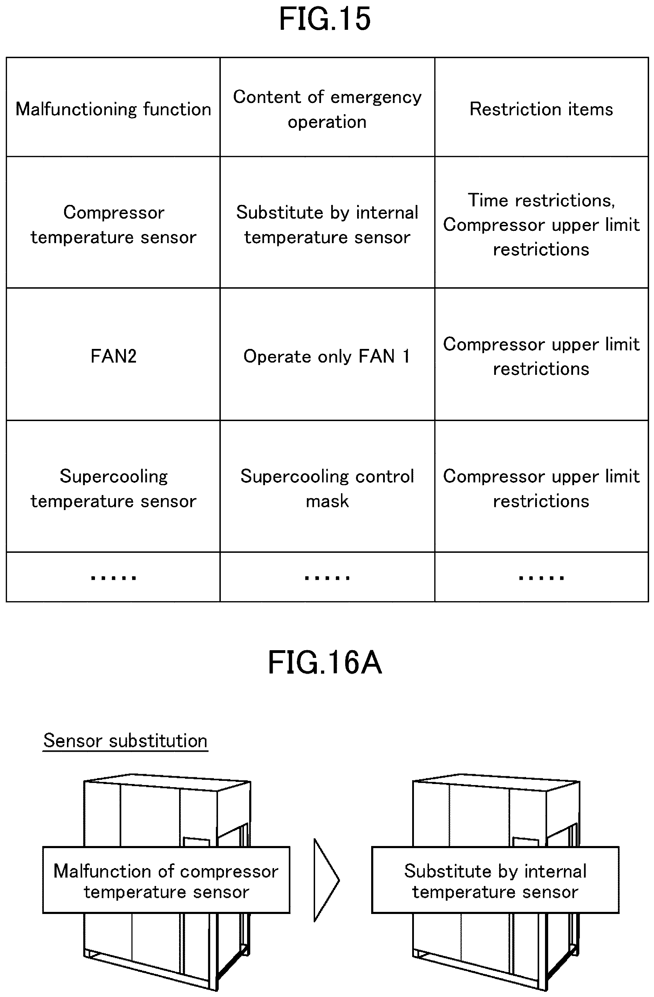

The edge device 10 newly includes an emergency operation information storage unit 16. The emergency operation information storage unit 16 stores what kind of emergency operation is to be performed with respect to the malfunction. The emergency operation will be described with reference to FIG. 15 and FIG. 16A through FIG. 16C.

FIG. 15 illustrates the emergency operation information stored in the emergency operation information storage unit 16. Each item of the emergency operation information will be described.
- An item of malfunctioning function is a malfunctioning sensor or a malfunctioning component determined from the abnormality code or the like.
- An item of content of emergency operation indicates what kind of emergency operation is to be performed with respect to the malfunctioning function. As illustrated in FIG. 15, control for operating the device 30 temporarily as an emergency measure even without the malfunctioning function is set for each of the malfunctioning functions.
- An item of restriction items is a restriction for securing a reliability because the emergency operation is performed within a range that does not affect the reliability.

FIG. 16A through FIG. 16C are diagrams illustrating three patterns of the emergency operation. In FIG. 15, in a case where the malfunctioning function is "compressor temperature sensor" and the content of the emergency operation is "substitute by internal temperature sensor", a malfunctioning sensor is substituted by a sensor that is not malfunctioning. This is one pattern of the emergency operation as illustrated in FIG. 16A, and will be referred to as a sensor substitution. The sensors may include replaceable sensors, such as a temperature sensor or the like located near a malfunctioning temperature sensor. In the sensor substitution pattern, such a sensor is set in the emergency operation information. In FIG. 15, the restriction items are "time restrictions, compressor upper limit restrictions". The time restriction is a time for which the emergency operation can be continued, and the compressor upper limit restriction is a limit of overheating prevention measures.

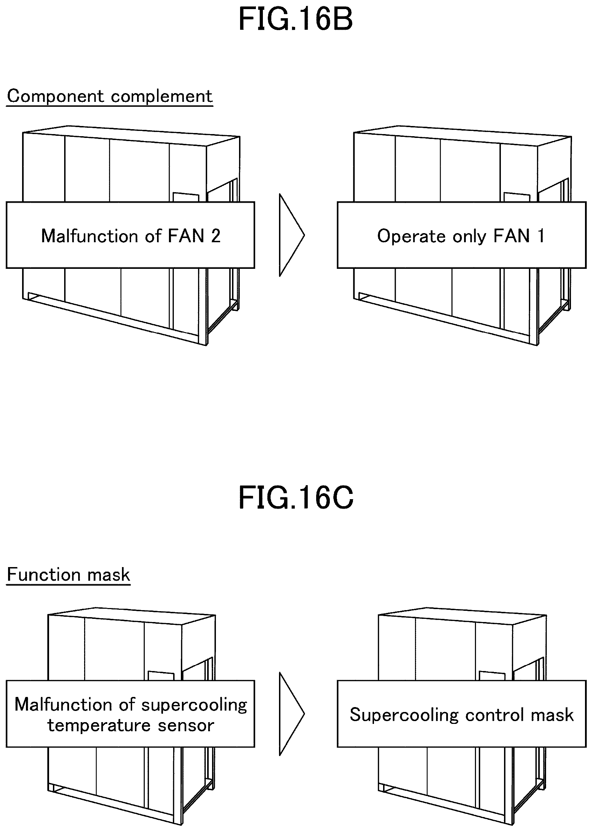

In FIG. 15, in a case where the malfunctioning function is "FAN 2" and the emergency operation is "operate only FAN 1", a component is complemented by another component. This is one pattern of the emergency operation as illustrated in FIG. 16B, and will be referred to as a component complementation. Some components may have equivalent or similar functions. In the component complementation pattern, such a component is set in the emergency operation information. In FIG. 15, the restriction items are "compressor upper limit restrictions". The compressor upper limit restriction is a limit of the overheating prevention measures.

In FIG. 15, in a case where the malfunctioning function is "supercooling temperature sensor" and the content of the emergency operation is "supercooling control mask", the function of supercooling control is masked (the function is not used). This is one pattern of emergency operation as illustrated in FIG. 16C, and will be referred to as a function mask. Some of the malfunctioning components are used only for a specific function, but the operation may be possible without the function. In the pattern of the function mask, the mask of such a function is set in the emergency operation information. In FIG. 15, the restriction items are "compressor upper limit restrictions". The compressor upper limit restriction is a limit of the overheating prevention measures.

The malfunctioning functions or the like illustrated in FIG. 15 are merely examples, and various methods for performing the emergency operation by the sensor substitution, the component complementation, or the function mask are stored in the emergency operation information storage unit 16. The emergency operation information storage unit 16 illustrated in FIG. 15 is referred to by the instruction switching unit 12 in the case where the emergency operation is instructed to the second model 30b.

The instruction switching unit 12 switches the content of the instruction according to the model of the device 30 which transmitted the abnormality code. In the case where the device 30 is the first model, the instruction switching unit 12 instructs to stop the malfunctioning outdoor unit of the multi-system and continue the operation of the non-malfunctioning outdoor unit of the multi-system. In the case where the device 30 is the second model, the instruction switching unit 12 specifies the malfunctioning function based on the abnormality code, and instructs the content of the emergency operation acquired from the emergency operation information storage unit 16.

### <<Server Apparatus>>

A description will be made by referring back to FIG. 14. The server apparatus 60 newly includes an emergency operation instruction unit 67. When the communication unit 61 receives an abnormality code from the device 30 via the edge device 10, the emergency operation instruction unit 67 instructs the edge device 10 to perform an emergency operation in the following cases based on the abnormality code storage unit 66.
- A case where the microcomputer reset is instructed, but the abnormality code is transmitted again.
- A case where the microcomputer reset is not possible, but the emergency operation is possible.

More specifically, whether or not the emergency operation is possible with respect to the abnormality code is determined, and the emergency operation instruction unit 67 instructs the edge device 10 to perform the emergency operation with respect to the abnormality code for which the emergency operation is possible.

### <Operation or Process>

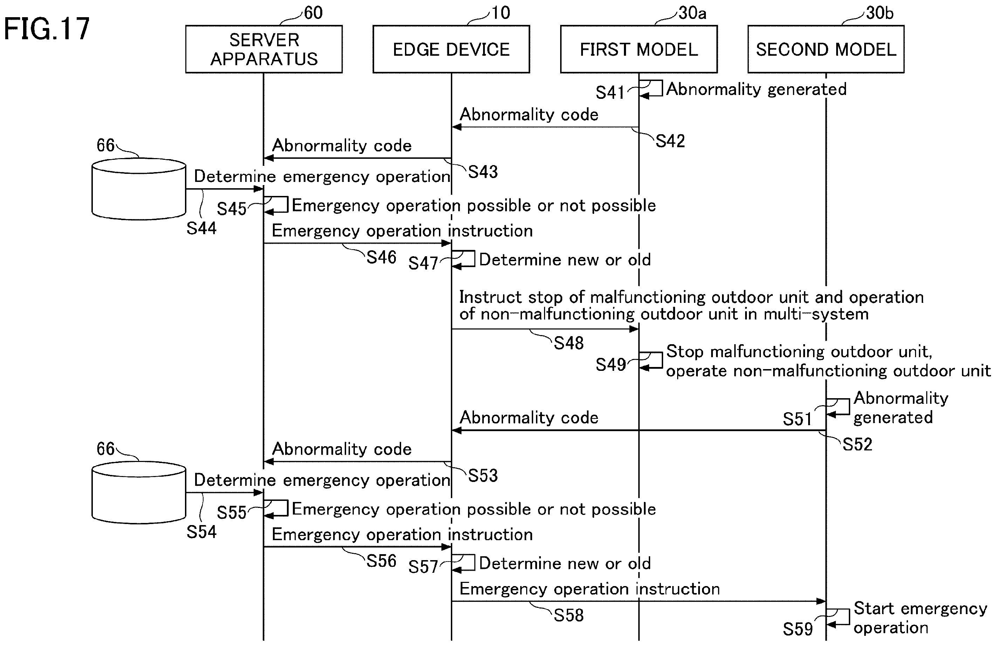

Next, a process of transmitting an emergency operation instruction from the edge device 10 to the device 30 will be described with reference to FIG. 17. FIG. 17 is a sequence diagram for explaining a process in which the edge device 10 switches the emergency operation instruction from the server apparatus 60 to an instruction according to the model of the device 30 and transmits the switched instruction to the device 30. First, a case where an abnormality occurs in the first model 30a will be described.

S41: An abnormality occurs during operation of the first model 30a. The abnormality detection unit 32 detects the abnormality.

S42: When the abnormality detection unit 32 detects the abnormality, the communication unit 21 promptly transmits an abnormality code to the edge device 10. The identification information of the device 30 is attached to the abnormality code. The operation unit 34 stops the operation.

S43: When the communication unit 15 of the edge device 10 receives the abnormality code, the communication unit 11 transmits the abnormality code to the server apparatus 60.

S44: The communication unit 61 of the server apparatus 60 receives the abnormality code, and the emergency operation instruction unit 67 acquires whether or not the emergency operation is possible, associated with the abnormality code, from the abnormality code storage unit 66.

S45: Next, the emergency operation instruction unit 67 determines whether or not the microcomputer reset instruction is already transmitted. The emergency operation is instructed when the microcomputer reset is already transmitted and the emergency operation is possible, or when the microcomputer reset is not transmitted because the microcomputer reset is not possible but the emergency operation is possible. In this example, it is assumed that these conditions are satisfied.

S46: The emergency operation instruction unit 67 transmits the emergency operation instruction to the edge device 10 without taking into consideration the model of the device 30.

S47: The communication unit 11 of the edge device 10 receives the emergency operation instruction, and the instruction switching unit 12 determines the model of the device 30 which transmitted the abnormality code by referring to the model determination information storage unit 13. The model name may be transmitted to the edge device 10 together with the abnormality code, or the instruction switching unit 12 may inquire the model name again to the first model 30a.

S48: With respect to the first model 30a, the instruction switching unit 12 instructs to stop the malfunctioning outdoor unit of the multi-system and to operate the non-malfunctioning outdoor unit in the multi-system.

S49: Because the communication unit 31 of the first model 30a receives the above instruction, the operation unit 34 stops the malfunctioning outdoor unit and starts the operation of the non-malfunctioning outdoor unit. In a case where the operation is already stopped due to the detection of the malfunction, the malfunctioning outdoor unit may be kept stopped. Further, in the first model 30a, it is clear which outdoor unit of the multi-system is malfunctioning.

Next, a case where an abnormality occurs in the second model 30b will be described.

S51: An abnormality occurs during operation of the second model 30b. The abnormality detection unit 32 detects the abnormality.

S52: When the abnormality detection unit 32 detects the abnormality, the communication unit 31 promptly transmits an abnormality code to the edge device 10. The identification information of the device 30 is attached to the abnormality code. Processes of subsequent steps S53 to S57 may be the same as those of steps S43 to S47.

S58: With respect to the second model 30b, the instruction switching unit 12 determines a malfunctioning function based on the abnormality code, and acquires the content of the emergency operation from the emergency operation information storage unit 16. The instruction switching unit 12 transmits the emergency operation instruction together with the content of the emergency operation, via the communication unit 15.

S59: Because the communication unit 31 of the second model 30b receives the emergency operation instruction, the emergency operation unit 41 starts the emergency operation of the instructed content based on a final emergency operation start operation of the user.

Hence, the edge device 10 according to the present disclosure switches the emergency operation instruction from the server apparatus 60 according to the model, and transmits the switched instruction to the device. Accordingly, because the server apparatus 60 simply needs to transmit one emergency operation instruction to the edge device 10, the present disclosure can reduce the traffic volume between the server apparatus 60 and the edge device 10. In addition, because the server apparatus 60 does not switch the inspection instruction depending on the model, the processing load can be reduced.

### <Other Application Examples>

Although the best mode for carrying out the present invention is described above with reference to the embodiments, the present invention is not limited to these embodiments, and various modifications and substitutions can be made without departing from the scope of the present invention.

For example, in the third modification, the edge device 10 determines the content of the emergency operation with respect to the second model 30b, but the second model 30b may determine the content of the emergency operation.

In addition, the configuration example of FIG. 6 or the like is divided according to the main functions in order to facilitate the understanding of the processes of the device 30, the edge device 10, and the server apparatus 60, but the present invention is not limited by the method of dividing the processing units or by the names of the processing units. The processes of the device 30, the edge device 10, and the server apparatus 60 may be divided into a larger number of processing units according to the processing contents. Further, the processes may be divided such that one processing unit further includes more processes.

Moreover, a device group described in the embodiments represents only one of a plurality of computing environments for implementing the embodiments disclosed in the present specification. In some embodiments, the server apparatus 60 includes a plurality of computing devices, such as a server cluster. The plurality of computing devices are configured to be communicable with one another via an arbitrary type of communication link, including a network, a shared memory, or the like, and perform the processes disclosed in the present specification.

Each function of the present disclosure described above can be implemented not only by software processing by execution of a program, but also by one or a plurality of processing circuits. The "processing circuits" in the present specification include a processor programmed to execute each function by software, such as a processor implemented by an electronic circuit, and a device designed to execute each function described above, such as an application specific integrated circuit (ASIC), a digital signal processor (DSP), a field programmable gate array (FPGA), a conventional circuit module, or the like.

This application is based upon and claims priority to Japanese Patent Application No. 2022-118659 filed on July 26, 2022 before the Japan Patent Office.

### DESCRIPTION OF REFERENCE NUMERALS

10: Edge device
30: Device
60: Server apparatus
100: Management system

## Claims

1. A management system (100) having a controller communicable with a first air conditioner and a second air conditioner of a model different from a model of the first air conditioner, and a server apparatus (60) communicable with the controller, wherein:
a control unit of the controller is configured to transmit an instruction according to the models of the first air conditioner and the second air conditioner to the first air conditioner or the second air conditioner, in a case where an instruction is received from the server apparatus (60),
**characterized in that**:
the first air conditioner is configured to store a program corresponding to a first control, and the second air conditioner is not configured to store the program, and
the control unit of the controller is configured to instruct the first control with respect to the first air conditioner, and to instruct a second control that substitutes for the first control with respect to the second air conditioner, in a case where an instruction related to the first control is received from the server apparatus (60).

2. The management system (100) as claimed in claim 1**,** wherein the second control is an operation setting of the second air conditioner set by the control unit of the controller.

3. The management system (100) as claimed in claim 1 or 2, wherein the control unit of the controller is configured to instruct the first air conditioner to execute the program as the first control, in a case where an inspection instruction is received from the server apparatus (60) as the instruction related to the first control.

4. The management system (100) as claimed in claim 3, wherein the program is a pre-season inspection program for inspecting whether or not a malfunction occurred in an air conditioner in a case where the air conditioner is stopped for a certain period of time.

5. The management system (100) as claimed in claim 3, wherein the program is configured to perform predetermined control for predicting a malfunction of each component included in the first air conditioner.

6. The management system (100) as claimed in claim 1, wherein the control unit of the controller is configured to instruct a restart of the control unit to the first air conditioner, and to instruct stop and resume operation by remote control to the second air conditioner, in a case where an instruction to restart the control unit as the instruction related to the first control is received from the server apparatus (60).

7. The management system (100) as claimed in claim 1, wherein the control unit of the controller is configured to instruct an emergency operation to the first air conditioner, and to instruct stopping a malfunctioning outdoor unit to the second air conditioner, in a case where an instruction instructing the emergency operation is received as the instruction related to the first control from the server apparatus (60).

8. An instruction method performed by a management system (100) having a controller communicable with a first air conditioner and a second air conditioner of a model different from a model of the first air conditioner, and a server apparatus (60) communicable with the controller, the instruction method comprising:
transmitting, by a control unit of the controller, an instruction according to the models of the first air conditioner and the second air conditioner to the first air conditioner or the second air conditioner, in a case where an instruction is received from the server apparatus (60),
**characterized in that**:
the first air conditioner stores a program corresponding to a first control, and the second air conditioner does not store the program, and
the instruction method further comprising:
instructing the first control with respect to the first air conditioner, and instructing a second control that substitutes for the first control with respect to the second air conditioner, in a case where an instruction related to the first control is received from the server apparatus (60).

9. A controller communicable with a server apparatus (60), a first air conditioner that is configured to store a program corresponding to first control, and a second air conditioner of a model different from a model of the first air conditioner,
**characterized in that**:
the second air conditioner is not configured to store the program, and
a control unit of the controller is configured to instruct the first control with respect to the first air conditioner, and to instruct a second control that substitutes for the first control with respect to the second air conditioner, in a case where an instruction related to the first control is received from the server apparatus (60).

## Patentansprüche

1. Verwaltungssystem (100) mit einem Steuergerät, das mit einer ersten Klimaanlage und einer zweiten Klimaanlage eines Modells, das sich von einem Modell der ersten Klimaanlage unterscheidet, kommunizieren kann, und mit einer Servereinrichtung (60), die mit dem Steuergerät kommunizieren kann, wobei:
eine Steuereinheit des Steuergeräts ausgebildet ist, um einen Befehl nach den Modellen der ersten Klimaanlage und der zweiten Klimaanlage an die erste Klimaanlage oder die zweite Klimaanlage zu übertragen, in einem Fall, in dem ein Befehl von der Servereinrichtung (60) empfangen wird,
**dadurch gekennzeichnet, dass**:
die erste Klimaanlage ausgebildet ist, um ein Programm zu speichern, das einer ersten Steuerung entspricht, und die zweite Klimaanlage nicht ausgebildet ist, um das Programm zu speichern, und
die Steuereinheit des Steuergeräts so ausgebildet ist, dass sie hinsichtlich der ersten Klimaanlage einen Befehl bezüglich der ersten Steuerung erteilt und hinsichtlich der zweiten Klimaanlage einen Befehl bezüglich einer zweiten Steuerung erteilt, die die erste Steuerung ersetzt, in einem Fall, in dem ein Befehl in Bezug auf die erste Steuerung von der Servereinrichtung (60) empfangen wird.

2. Verwaltungssystem (100) nach Anspruch 1, wobei die zweite Steuerung eine Betriebseinstellung der zweiten Klimaanlage ist, die von der Steuereinheit des Steuergeräts eingestellt wird.

3. Verwaltungssystem (100) nach Anspruch 1 oder 2, wobei die Steuereinheit des Steuergeräts ausgebildet ist, um der ersten Klimaanlage einen Befehl zu erteilen, das Programm als die erste Steuerung auszuführen, in einem Fall, in dem ein Prüfbefehl von der Servereinrichtung (60) als der Befehl in Bezug auf die erste Steuerung empfangen wird.

4. Verwaltungssystem (100) nach Anspruch 3, wobei das Programm ein Vorsaison-Prüfprogramm zum Prüfen dessen ist, ob in einer Klimaanlage eine Fehlfunktion aufgetreten ist oder nicht, in einem Fall, in dem die Klimaanlage für einen bestimmten Zeitraum gestoppt wird.

5. Verwaltungssystem (100) nach Anspruch 3, wobei das Programm ausgebildet ist, um eine vorbestimmte Steuerung zum Vorhersagen einer Fehlfunktion jeder Komponente durchzuführen, die in der ersten Klimaanlage eingeschlossen ist.

6. Verwaltungssystem (100) nach Anspruch 1, wobei die Steuereinheit des Steuergeräts ausgebildet ist, um der ersten Klimaanlage einen Befehl zu einem Neustart der Steuereinheit zu erteilen und der zweiten Klimaanlage einen Befehl zum Stoppen und Wiederaufnehmen des Betriebs mittels Fernbedienung zu erteilen, in einem Fall, in dem ein Befehl zum Neustart der Steuereinheit als der Befehl in Bezug auf die erste Steuerung von der Servereinrichtung (60) empfangen wird.

7. Verwaltungssystem (100) nach Anspruch 1, wobei die Steuereinheit des Steuergeräts ausgebildet ist, um der ersten Klimaanlage einen Befehl zu einem Notbetrieb zu erteilen und der zweiten Klimaanlage einen Befehl zum Stoppen einer fehlerhaften Außeneinheit zu erteilen, in einem Fall, in dem ein Befehl, der den Notbetrieb befiehlt, als der Befehl in Bezug auf die erste Steuerung von der Servereinrichtung (60) empfangen wird.

8. Befehlsverfahren, das durch ein Verwaltungssystem (100) ausgeführt wird, das ein Steuergerät aufweist, das mit einer ersten Klimaanlage und einer zweiten Klimaanlage eines Modells, das sich von einem Modell der ersten Klimaanlage unterscheidet, kommunizieren kann, und eine Servereinrichtung (60), die mit dem Steuergerät kommunizieren kann, das Befehlsverfahren umfassend:
Übertragen, durch eine Steuereinheit des Steuergeräts, eines Befehls nach den Modellen der ersten Klimaanlage und der zweiten Klimaanlage an die erste Klimaanlage oder die zweite Klimaanlage, in einem Fall, in dem ein Befehl von der Servereinrichtung (60) empfangen wird,
**dadurch gekennzeichnet, dass**:
die erste Klimaanlage ein Programm speichert, das einer ersten Steuerung entspricht, und die zweite Klimaanlage das Programm nicht speichert, und
das Befehlsverfahren weiter umfassend:
Erteilen eines Befehls bezüglich der ersten Steuerung hinsichtlich der ersten Klimaanlage und Erteilen eines Befehls bezüglich einer zweiten Steuerung, die die erste Steuerung ersetzt, hinsichtlich der zweiten Klimaanlage, in einem Fall, in dem ein Befehl in Bezug auf die erste Steuerung von der Servereinrichtung (60) empfangen wird.

9. Steuergerät, das mit einer Servereinrichtung (60), einer ersten Klimaanlage, die ausgebildet ist, um ein Programm zu speichern, das einer ersten Steuerung entspricht, und einer zweiten Klimaanlage eines Modells, das sich von einem Modell der ersten Klimaanlage unterscheidet, kommunizieren kann,
**dadurch gekennzeichnet, dass**:
die zweite Klimaanlage nicht ausgebildet ist, um das Programm zu speichern, und
eine Steuereinheit des Steuergeräts so ausgebildet ist, dass sie hinsichtlich der ersten Klimaanlage einen Befehl bezüglich der ersten Steuerung erteilt und hinsichtlich der zweiten Klimaanlage einen Befehl bezüglich einer zweiten Steuerung erteilt, die die erste Steuerung ersetzt, in einem Fall, in dem ein Befehl in Bezug auf die erste Steuerung von der Servereinrichtung (60) empfangen wird.

## Revendications

1. Système de gestion (100) présentant un dispositif de commande pouvant communiquer avec un premier climatiseur et un deuxième climatiseur d'un modèle différent d'un modèle du premier climatiseur, et un appareil serveur (60) pouvant communiquer avec le dispositif de commande, dans lequel :
une unité de commande du dispositif de commande est configurée pour transmettre une instruction selon les modèles du premier climatiseur et du deuxième climatiseur au premier climatiseur ou au deuxième climatiseur, dans le cas où une instruction est reçue de l'appareil serveur (60),
**caractérisé en ce que** :
le premier climatiseur est configuré pour stocker un programme correspondant à une première commande, et le deuxième climatiseur n'est pas configuré pour stocker le programme, et
l'unité de commande du dispositif de commande est configurée pour donner instruction à la première commande concernant le premier climatiseur, et pour donner instruction à une deuxième commande qui se substitue à la première commande concernant le deuxième climatiseur, dans le cas où une instruction relative à la première commande est reçue de l'appareil serveur (60).

2. Système de gestion (100) selon la revendication 1, dans lequel la deuxième commande est un réglage de fonctionnement du deuxième climatiseur réglé par l'unité de commande du dispositif de commande.

3. Système de gestion (100) selon la revendication 1 ou la revendication 2, dans lequel l'unité de commande du dispositif de commande est configurée pour donner instruction au premier climatiseur d'exécuter le programme en tant que première commande, dans le cas où une instruction d'inspection est reçue de l'appareil serveur (60) en tant qu'instruction relative à la première commande.

4. Système de gestion (100) selon la revendication 3, dans lequel le programme est un programme d'inspection de pré-saison destiné à inspecter si un dysfonctionnement s'est produit ou non dans un climatiseur dans le cas où le climatiseur est arrêté pendant une certaine période de temps.

5. Système de gestion (100) selon la revendication 3, dans lequel le programme est configuré pour effectuer une commande prédéterminée pour prédire un dysfonctionnement de chaque composant inclus dans le premier climatiseur.

6. Système de gestion (100) selon la revendication 1, dans lequel l'unité de commande du dispositif de commande est configurée pour donner instruction au premier climatiseur de redémarrer l'unité de commande, et pour donner instruction au deuxième climatiseur d'effectuer l'arrêt et la reprise du fonctionnement par télécommande, dans le cas où une instruction de redémarrage de l'unité de commande en tant qu'instruction relative à la première commande est reçue de l'appareil serveur (60).

7. Système de gestion (100) selon la revendication 1, dans lequel l'unité de commande du dispositif de commande est configurée pour donner instruction au premier climatiseur d'effectuer un fonctionnement d'urgence, et pour donner instruction au deuxième climatiseur d'arrêter une unité extérieure défaillante, dans le cas où une instruction donnant instruction d'effectuer un fonctionnement d'urgence est reçue de l'appareil serveur (60) en tant qu'instruction relative à la première commande.

8. Procédé d'instruction effectué par un système de gestion (100) présentant un dispositif de commande pouvant communiquer avec un premier climatiseur et un deuxième climatiseur d'un modèle différent d'un modèle du premier climatiseur, et un appareil serveur (60) pouvant communiquer avec le dispositif de commande, le procédé d'instruction comprenant :
une transmission, par une unité de commande du dispositif de commande, d'une instruction selon les modèles du premier climatiseur et du deuxième climatiseur au premier climatiseur ou au deuxième climatiseur, dans le cas où une instruction est reçue de l'appareil serveur (60),
**caractérisé en ce que** :
le premier climatiseur stocke un programme correspondant à une première commande, et le deuxième climatiseur ne stocke pas le programme, et
le procédé d'instruction comprenant en outre :
le fait de donner instruction à la première commande concernant le premier climatiseur, et pour donner instruction à une deuxième commande qui se substitue à la première commande concernant le deuxième climatiseur, dans le cas où une instruction relative à la première commande est reçue de l'appareil serveur (60).

9. Dispositif de commande pouvant communiquer avec un appareil serveur (60), un premier climatiseur qui est configuré pour stocker un programme correspondant à une première commande, et un deuxième climatiseur d'un modèle différent d'un modèle du premier climatiseur,
**caractérisé en ce que** :
le deuxième climatiseur n'est pas configuré pour stocker le programme, et
une unité de commande du dispositif de commande est configurée pour donner instruction à la première commande concernant le premier climatiseur, et pour donner instruction à une deuxième commande qui se substitue à la première commande concernant le deuxième climatiseur, dans le cas où une instruction relative à la première commande est reçue de l'appareil serveur (60).
